# EUROPEAN PATENT SPECIFICATION

(11) **EP 1 327 716 B1**
(45) Date of publication and mention of the grant of the patent: **25.10.2006**
(21) Application number: 03000127.5
(22) Date of filing: 03.01.2003
(51) Int. Cl.: D21H 27/32, D21H 27/38

(54) **Multiply tissue product**
Mehrschichtiges Tissue-Papierprodukt
Papier tissu multi couches

(30) Priority: 05.01.2002 EP 02000365
(43) Date of publication of application: 16.07.2003
(73) Proprietor: THE PROCTER & GAMBLE COMPANY, Cincinnati, Ohio 45202 (US)
(72) Inventor: Reinheimer, Horst Alfred, 65779 Kelkheim (DE); Chatterjee, Aniruddha, 61462 Königstein (DE); von Heimburg, Joachim, 1202 Geneve (CH)
(74) Representative: Hirsch, Uwe Thomas M.H.

(56) References cited:
- EP-A- 1 025 822
- EP-B- 0 755 212
- WO-A-01/14641
- WO-A-01/53589
- US-A- 5 916 670
- US-A- 6 015 608
- US-A- 6 060 079

## Description

The invention refers to a multiply tissue product, comprising at least two plies of tissue interconnected to each other layer by layer.

Such tissue products are known and broadly used in making handkerchiefs, napkins or especially so-called "kitchen rolls". These kinds of paper products comprise as a rule two or more plies of tissue, the material for which is selected from conventional tissue or special kinds of tissues, such as so-called "through-air-dried tissue" or "differential-density-tissue". The latter is made via a patterned paper making belt and through-air-drying technology.

Especially when used for kitchen rolls, the tissue webs representing the two or more plies of the kitchen towel are each embossed, the embossments forming knob-like elevations in the tissue web. Prior art and kitchen rolls actually marketed use so-called "nested-embossing" or "knob-to-knob embossing". In either case, both the webs are interconnected with the knob elevations facing each other. In nested-embossing the respective knobs of both the webs are positioned offset to each other whereas in knob-to-knob embossing the respective knobs of both the webs are aligned and contacting each other in head-to-head relation.

For the interconnection of the two (or more) plies of the tissue web the most common technique is to laminate the tissue plies together by applying a thin coating of glue to the heads of the knobs of one of the two embossed tissue webs and by leading both the webs either in "knob-to-knob" fashion directly upon each other through the nip of the steel embossing rolls or through the nip of a so-called "marrying roll" and one of the steel embossing rolls ("nested-embossing").

Now an important feature of multiply tissue towels especially when used as kitchen roll is the absorbent capacity, which substantially is defined by the properties of the tissue. Further consumers like to have a soft towel with a so-called "bulky grip", what is mainly achieved by the discussed embossing of the tissue webs.

Concerning the absorbency of hygienic products like diapers, sanitary napkins or panty liners it is known for decades to incorporate super absorbent particles into the absorbent core of these products. In this connection it is common practice to mix the cellulosic fibres forming the absorbent core by e.g. air-laying and super absorbent particles onto a belt. By the incorporation of super absorbent particles into the absorbent core, the absorbency capacity is drastically increased.

As concerns the absorbent capacity of paper towels it is known from WO 01 14641 A1 to mix super absorbent materials into paper webs to create tissue products such as facial tissues, paper towels, bath tissues and other similar products. Typical for the products described in this prior art is the fact that the super absorbent materials are mixed with a liquid suspension of fibrous papermaking material and may either be applied in a dry state or a so-called "pre-swollen state". This swelling of the super absorbent material is reported to have a variety of beneficial effects on web formation leading e.g. to a tissue product having higher bulk, permeability and void volume.

The amount of super absorbent material utilized can vary depending on the desired characteristics of the resulting tissue product. Super absorbent material concentrations between about 0.1% by weight to about 10% by weight are disclosed in this prior art, wherein the most preferred range is between about 0.1% to about 3% by weight. By applying a super absorbent material present in an amount of about 1% by weight of the fibrous material of the tissue web an increase of the absorbency capacity of the tissue by about 15% can be achieved.

This prior art WO 01 14641 A1 discloses a broad variety of materials, basis weights and kinds of incorporating the super absorber into the tissue web. In any case, however, the super absorbent materials are contained in the tissue material, i.e. the super absorbent particles are intermixed with the tissue fibres. In as much the tissue product containing a super absorbent material according to WO 01 14641 A1 is basically formed by a papermaking process based on tissue fibre materials on one hand, and a super absorbent material on the other hand.

Due to the foregoing, the basic papermaking process leading to a tissue web has to be adapted to the need of intermixing a super absorbent material. This means that additional constructive arrangements concerning the addition of the super absorbent material have to be supplied along the papermaking process line. Further the papermaking process conditions have to be adapted to the fact that a super absorber is additionally present in the tissue web, as e.g. the drying behaviour of the super absorbers is very different from that of the tissue fibres as is explicitly stated in WO 01 14641 A1.

Accordingly, it is an object of the invention to provide for a multiply tissue towel which shows the benefits of incorporated super absorbent materials, which, however, avoids the discussed disadvantages in connection with the incorporation of super absorbers into the tissue web itself.

According to the invention such a multiply tissue towel according to claim 1 comprises
- at least two plies of tissue interconnected to each other layer by layer, and
- a layer comprising super absorbent fibre-like particles in at least one interface region in between two adjacent plies of said tissue webs, wherein the basis weight of said layer is in the order of 0.5% to 50% of the overall basis weight of said two adjacent plies of said tissue webs defining the interface region.

Accordingly, contrary to the prior art, the super absorbent materials are not embedded in the fibrous cellulosic structure of the tissue web, but constitute a separate layer between at least two adjacent plies of the tissue web. This means that the addition of the super absorbent material has nothing to do with the papermaking process for the tissue web itself. Tissue webs can be produced as usual where after the super absorbent particles can be added in between two plies, as particles, in a mix with other components or as part of an individual layer comprising super absorbent fibre-like particles and non super absorbent fibers. This in turn means that the super absorbent material does not get into contact with the wet papermaking pulp. Therefore, no negative effects are generated by wetting the super absorbent materials prior to incorporation. Although the cited prior art describes certain advantages of the so-called "pre-swelling" of the super absorbent materials it is in fact possible that by this pre-swelling the absorbency capacity of the super absorbers can be negatively affected.

Another feature of the invention is the fibre-like design of the super absorbent particles. The size and shape of the super absorbers help to avoid problems in connection with the particles flowing out of the towel product, the so-called "dusting". When using regular super absorbent powder particles, like super absorbent granules, there would be a health risk in case such granules dust off into the air and are inhaled. Further on, the flowing-out of super absorbent particles from the towel would deteriorate the absorptive properties of the towel. These problems are avoided by using fibre-like particles, which have a kind of inherent "grip" in between the plies of the tissue towel.

Another and especially surprising advantage of incorporating super absorbent fibre-like particles into the interface region in between two adjacent plies of the tissue webs lies in the fact that the specific absorbent capacity of such fibres increases when decreasing amounts of super absorbent fibres are used. As will be discussed in the description of the preferred embodiments, the specific absorbent capacity attributed to the super absorbent fibres alone increases from e.g. 150 to 208 g/g when decreasing the add-on level of the super absorbent fibres from 7.1% to 2.4% by weight of the basis weight of the tissue plies. This effect seems to be a result of the unrestrained swelling of the super absorbent fibres when they are further apart from each other. In this state - even in the loaded condition - the fibres do create voids in their surroundings which act as reservoirs to trap additional water outside them but within the interface between two plies of tissue web.

Preferred embodiments of the invention refer to the physical properties of the super absorbent fibre-like particles and various ways to enhance the fixation of the fibre-like particles in between the tissue webs without effectively deteriorating the absorbent capacity of the super absorbers.

Preferred embodiments of the invention will now be described by referring to the accompanying drawings, in which
- Fig. 1: is a partial diagrammatic section of a four-ply-towel in two embodiments,
- Fig. 2: is a partial diagrammatic section of a two-ply-towel in another preferred embodiment, and
- Fig. 3: is a diagrammatic elevation of a paper towel production line.

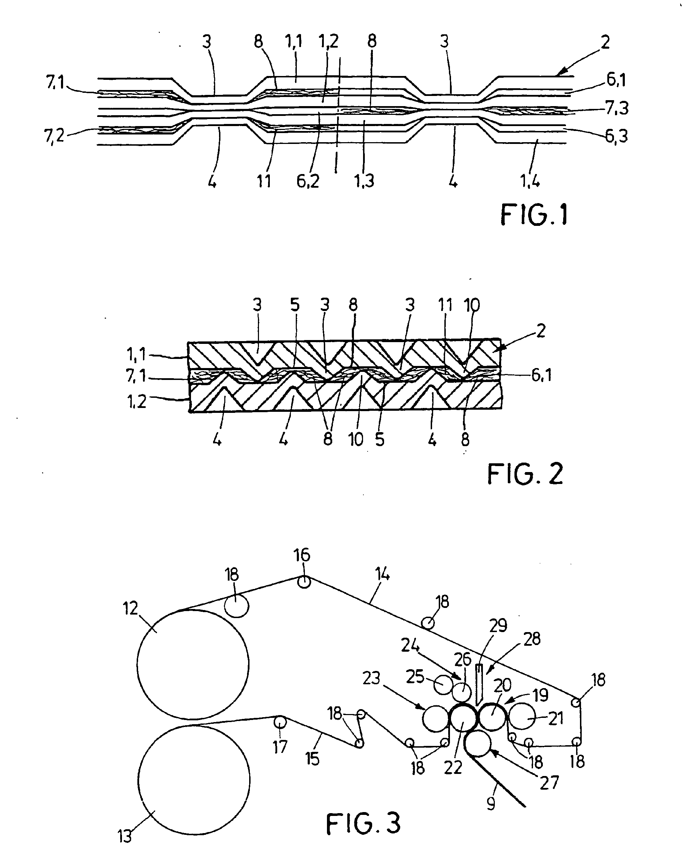

Fig. 1 represents a tissue product comprising four plies 1.1 through 1.4 of a common tissue web 2 produced by a known papermaking process. For sake of clarity the cellulose fibres constituting the tissue web 2 are omitted in Fig. 1.

Now the four individual plies 1.1 through 1.4 are held together by impressions which are formed in each case by two embossed spots 3, 4 which are mutually aligned transversely to the main plane of the plies 1.1 through 1.4 and curved concavely inwardly from the two outer plies 1.1, 1.4 of the respective tissue web. The inner plies 1.2, 1.3 are thus enclosed. The embossed spots 3, 4 are applied in such a way that the plies of tissue 1.1 through 1.4 are somewhat squeezed together by the embossing action in the base region 5 of the embossed spots 3, 4 and are accordingly "bonded" to each other. The stability of this "bonding" is enhanced by a thin glue layer (not shown) applied to the plies 1.1 through 1.4, e.g. by spraying. Thus atomised glue spots are applied to the surface of the plies 1.1 through 1.3 facing the adjacent ply 1.2, 1.3 and 1.4, respectively.

The basic paper towel structure shown in Fig. 1 is known as knob-to-knob embossing. The production process is disclosed in EP 0 755 212 B1.

The plies 1.1 through 1.4 are interconnected to each other side by side by the embossed spots 3, 4. Inasmuch two adjacent plies define an interface region 6.1, 6.2 and 6.3, respectively, in each of which a layer 7.1, 7.2 and 7.3 of super absorbent fibre-like particles 8 is incorporated. As is indicated on the left side of Fig. 1 the four-ply-towel comprises two layers 7.1 and 7.2 in both the outer interface regions 6.1 and 6.3. The central interface region 6.2 between plies 1.2 and 1.3 is not provided with such super absorbent fibres 8.

These fibres are commercially available, e.g. under the trade name Camelot by Camelot Technologies, Ltd. The concentration of the super absorbent fibres 8 in the layers 7.1 and 7.2 is in the order of 0.5% to 10% of the overall basis weight of the respective adjacent plies 1.1, 1.2 and 1.3, 1.4. A preferred range of the basis weight of the layers 7.1 and 7.2 is 1% to 3% of said overall basis weight. In absolute figures the super absorbent fibre-like particles 8 are applied with a basis weight of 0.2 to 5.0 g/m², preferably of 0.5 to 2.0 g/m² in each layer 7.1 through 7.3. The length of the super absorbent fibres 8 ranges from 3 to 30 mm, preferably from 4 to 10 mm. The fibre diameters can vary form 5 to 40 µm with a preferred range of 20 to 30 µm. The fibre density of the fibre-like particles 8 ranges from 1.0 to 2.0 g/cm³, preferably from 1.3 to 1.5 g/cm³.

As is indicated in Fig. 1, right side, a single layer 7.3 of fibre particles 8 can also be provided solely in the central interface region 6.2 between plies 1.2 and 1.3. This layer 7.3 has the same specifications as the layers 7.1 and 7.2, respectively.

The basis weight range of the individual plies commonly lies within 14 to 60 g/m². The individual tissue webs can be made of conventional tissue, of through-air-dried tissue or special kinds of tissue, e.g. so-called "differential-density-tissue", which is made by means of a patterned papermaking belt and through-air-drying technology. Examples for such differential-density-tissue are disclosed in EP 0 741 820 A1.

In Fig. 2 a two-ply tissue towel 9 is shown which is produced by means of the so-called "nested-embossed technology" as will be described in connection with Fig. 3. As concerns the towel 9, each ply 1.1 and 1.2 is again provided with embossed spots 3, 4. Contrary to the embodiment of Fig. 1, however, these spots 3, 4 are not aligned with each other but arranged offset. Thus an embossed spot 3 of ply 1.1 lies in between two embossed spots 4 of the ply 1.2. Both plies 1.1, 1.2 are interconnected by laminating. This is realized by applying a thin glue coating to the heads 10 of the elevated embossed spots 3 of the first ply 1.1. By leading both plies 1.1 and 1.2 through a nip of laminating or so-called marrying rolls (see Fig. 3) both plies 1.1 and 1.2 are adhered to one another.

As is indicated in Fig. 2 the embossed spots 3, 4 again form kind of open compartments 11 in the interface region 6.1 between both plies 1.1, 1.2. Again super absorbent fibre-like particles 8 are laid between both plies 1.1, 1.2 to form a super absorbent layer in this interface region 6.1. The specifications of the fibre particles 8 accord to the features discussed in connection with Fig. 1.

The two plies 1.1, 1.2 of the towel 9 together may have a basis weight of e.g. 42 g/m².

Now referring to Fig. 3 a method and apparatus for producing a two-ply-tissue towel web according to the invention is described. The production process starts from two supply or so-called 'parent' rolls 12, 13, each of a one-ply-tissue of a basis weight of approximately 20 g/m². The upper and lower tissue web 14, 15 are guided over a so-called "Spencer Johnson bowed roll" 16, 17 which acts as a straightener to stretch the webs and remove any wrinkles in it. Via several idle guide rolls 18 each web is guided to a combined embossing/laminating unit indicated as a whole by reference numeral 19 in Fig. 3. The upper web 14 enters the nip formed between a first steel embossing roll 20 and a pressure roll 21 covered with an elastic rubber sleeve. By passing this nip the upper web 14 is provided with the embossed spots 3 shown in Fig. 2. After the nip the upper web 14 is guided by an angle of about 180° along steel embossing roll 20, where after it enters another nip between said steel embossing roll 20 and a second steel embossing roll 22. The latter cooperates with a second pressure roll 23 forming the embossing nip for the lower tissue web 15. In this nip the lower tissue web 15 is provided with the embossed spots 4 again shown in Fig. 2. The lower tissue web 15 is also guided around steel embossing roll 22 to enter the nip between both steel embossing rolls 20, 22.

Now the embossing patterns on both steel embossing rolls 20, 22 are designed and aligned such that the embossed spots 3 on the upper tissue web 14 nest in between the embossed spots 4 of the lower tissue web 15 and vice versa. Accordingly, the two-ply-tissue towel produced on the unit shown in Fig. 3 is of the "nested-embossed" type.

Now to stably connect the upper and lower tissue web 14, 15 a glue application device 24 is associated to the second steel embossing roll 22. This glue application device 24 comprises a so-called "gravure roll" 25 as metering device to take up a thin glue coating from a glue pan (not shown). The glue on gravure roll 25 is taken up by an applicator roll 26 which slightly contacts the heads of the embossed spots 4 on the lower tissue web 15 travelling on steel embossing roll 20. By means of this glue application the heads of the embossed spots 4 of the lower tissue web 15 are adhered to the upper tissue web 14, stably connecting both webs 14, 15. For this sake a so-called "marrying roll" 27 is associated to the lower steel embossing roll 22 directly downstream of the nip between both steel embossing rolls 20, 22. The marrying roll is a rubber covered steel roll which is biased versa steel embossing roll 22 by a regulated hydraulic loading pressure, thus forming a positive nip in order to ply-bond the upper and lower tissue webs 14, 15 together forming a single two-ply-paper towel web.

Now concerning the invention, the embossing/laminating unit 19 is further provided with a super absorbent fibre feeder 28 which is arranged above the nip between both the steel embossing rolls 20, 22. From the chute 29 super absorbent fibres as specified above are delivered via the chute slot into the interface region between both the upper and lower tissue webs 14, 15. The fibres are metered through a brush and metering roll assembly, fall by gravity and are delivered to the feeder by an homogeneous air suspended flow in an amount of e.g. 1.0 g/m².

Due to the described feeding, the super absorbent fibres are both mechanically entrapped in the compartments defined by the embossed spots 3, 4 and adhered to the paper structure by means of the glue ply-bonding the webs 14, 15 together.

Alternative measures to fix the fibre particles 8 between the webs 14, 15 are on the one hand a glue coating sprayed onto at least one of said webs 14, 15 and on the other hand glue filaments forming a network with the super absorbent fibre-like particles 8 on at least one of said tissue webs 14, 15.

In another preferred embodiment of this invention, the super absorbent fibre-like particles are embedded into a layer (7), together with paper fibers, cellulosic fibers, or other non super-absorbing types of fibers. In WOO1/12902 A1, Nobles et al. describe a paper product having an absorbent inner ply with high calliper and a low density. That inner ply comprises hydrophilic fibres such as cotton fibres or synthetic fibres. WO 01/12902A1 is silent on the use and on the advantages of super absorbing fibre-like particles. In this embodiment of the present invention, the basis weight of the layer (7) is between 3 and 25 gsm, preferably between 5 and 15 gsm and most preferably between 7 and 13 gsm. In this embodiment, the layer (7) has its own individuality, i.e. can be qualified of individual layer as it has a sufficient mechanical cohesion to be handled as an individual layer of material. It can be preformed in a separate process and be assembled together with the other plies during the converting phase (dry stage). The layer (7) of this embodiment can have a basis weight between 0.5% and 50 % of the 2 adjacent plies, preferably 10 % to 35 %, most preferably 15 % to 25%. Beside the general benefits mentioned for the present invention, this particular embodiment display specific additional advantages versus prior art and prior industry practice: The layer comprising the super-absorbing particles can be designed and manufactured separately from the paper-making process or the converting process, giving more flexibility in the selection of the desired end characteristics (such as absorbency, liquid retention, softness, flexibility...) for the finished product. The layer (7) is a core of super absorbing material in the finished product used by the consumers, with the super-absorbing fibre-like particles being embedded (or trapped or encapsulated) in the layer, and the layer itself being sandwiched between the other plies. This reduces further the negative effect of dusting and prophetically accounts for a relatively dry surface of the product (by having the fluid trapped in the inner layer of the product). The intimate mixing of super-absorbing fibre-like particles with paper fibers or non super-absorbing fibres further reduces the gel effect that negatively impact the absorbency of the structure, by creating more physical separation (i.e. void space) between the super-absorbing particles.

When taking into account the different embodiments of the present invention, and as claimed in the present invention, the layer (7) comprises super absorbent fibre-like particles. The super absorbent fibre-like particles can be the only component of the layer (7) or can be associated with other components, such as other fibres. The term "comprising" characterising the composition of the layer (7) is therefore to be understood to include the more limiting wording of "a layer (7) of super-absorbent fibre-like particles" and in the broader sense of "layer (7) comprising at least some super-absorbent fibre-like particles".

The benefits of the invention are to be summarized as follows:
- The specific absorbency of the super absorbent fibre particles is increased when lowering the addition level within certain limits. As an example, the specific absorbent capacity - measured by DIN (=German Industrial Standard) method 54540, part 4, "Bestimmung der Wasseraufnahme" (="Determination of Water Absorption") of super absorbent fibres being added in a concentration of 2.4% in between the plies of a multiply tissue towel is 208 g/g, whereas the capacity is only 150 g/g when the addition level is 7.1% of the basis weight of the tissue webs. In horizontal modes of testing absorbent capacity, this effect is even more pronounced. For example specific absorptivity of fibres alone was 185 g/g (free swelling) and contained in between tissue plies in a concentration of 1 g/m² the specific absorptive increased to 380g/g attributed to the super absorbent fibres.
- The absorbency/wet strength ratio can be raised much higher than possible with existing technologies. For example, two-ply-paper towels actually marketed by the applicant reach an absorbency of about 12 g/g and a wet burst of approximately 350 g. By adding 1 g/m² or 3 g/m² of super absorbent fibres to this product, the absorbency can be increased to about 14 and 20 g/g, respectively, without negatively affecting the wet burst.
- The tissue towel according to the invention feels dryer at the same level of saturation with water/aqueous media, relative to an identical tissue towel with no super absorbent fibres.
- At levels of less than 2 g/m² the so-called "gel effect" is negligible when the tissue towel comprising super absorbent fibres is wetted.

## Claims

1. Multiply paper tissue product comprising
- at least two plies (1) of paper tissue (2) interconnected to each other layer by layer, and
- a layer (7) comprising super absorbent fibre-like particles (8) in at least one interface region (6) in between two adjacent plies (2) of said paper tissue (2), wherein the basis weight of said layer (7) is in the order of 0.5 % to 50% of the overall basis weight of said at least two adjacent plies (1) of said tissue together defining the interface region (6).

2. Multiply paper tissue product of claim 1
**characterized in that**
said basis weight of said layer (7) is in the order of 0.5% to 10% of the overall basis weight of said two adjacent plies (1) of said paper tissue together defining the interface region (6).

3. Multiply paper tissue product according to claim 1 or 2, wherein said layer (7) comprising super absorbent fibre-like particles (8) is applied with a basis weight of 0.2 to 5.0 g/m², preferably with a basis weight of 0.5 to 2.0 g/m² to the interface region (6).

4. Multiply paper tissue product according to any of the preceding claims, wherein the basis weight of said layer (7) comprising super absorbent fibre-like particles (8) is in the order of 1% to 3% of the overall basis weight of said two adjacent plies (1) of said paper tissue defining the interface region (6).

5. Multiply paper tissue product according to any of the preceding claims, wherein the fibre length of said super absorbent fibre-like particles (8) ranges from 3 to 30 mm, preferably from 4 to 10 mm.

6. Multiply paper tissue product according to any of the preceding claims, wherein the fibre diameter of said super absorbent fibre-like particles (8) ranges from 5 to 50 µm, preferably from 20 to 30 µm.

7. Multiply paper tissue product according to any of the preceding claims, wherein the fibre density of said super absorbent fibre-like particles (8) ranges from 1.0 to 2.0 g/cm³, preferably from 1.3 to 1.5 g/cm³.

8. Multiply paper tissue product according to any of the preceding claims, comprising at least two plies (1) of embossed paper tissue webs (2), wherein the super absorbent fibre-like particles (8) are at least partially fixed in said layer (7) by being entrapped in compartments within said interface (6) formed by said embossing.

9. Multiply paper tissue product according to any of the preceding claims, wherein the super absorbent fibre-like particles (8) are fixed by a glue coating providing for the interconnection of the two plies (1) of paper tissue (2).

10. Multiply paper tissue towel according to any of the preceding claims, wherein the super absorbent fibre-like particles (8) are fixed by a glue coating sprayed onto at least one of said plies (1) of the tissue (2).

11. Multiply paper tissue product according to any of the preceding claims, wherein the super absorbent fibre-like particles (8) are fixed by glue filaments, forming a network with the super absorbent fibre-like particles on at least one of said plies of tissue webs.

12. Multiply paper tissue product of claim 1 **characterized in that**, said layer (7) further comprises cellulosic paper fibres and forms an individual layer in which said super absorbent fibre-like particles are embedded into said layer (7) together with said cellulosic paper fibres.

13. Multiply paper tissue product according to any of the preceding claims, wherein the basis weight of said layer (7) comprising super absorbent fibre-like particles (8) is in the order of 10% to 35% of the overall basis weight of said two adjacent plies (1) of said paper tissue defining the interface region (6).

14. Multiply paper tissue product according to any of the preceding claims, **characterized in that** the basis weight of said layer (7) is between 3 and 25 gsm.

## Patentansprüche

1. Mehrlagiges Papiertuchprodukt, umfassend
- mindestens zwei Lagen (1) Papiertuch (2), die Schicht für Schicht miteinander verbunden sind, und
- eine Schicht (7), umfassend superabsorbierende faserartige Teilchen (8) in mindestens einem Grenzflächenbereich (6) zwischen zwei benachbarten Lagen (2) des Papiertuchs (2), wobei die flächenbezogene Masse der Schicht (7) in der Größenordnung von 0,5 % bis 50 % der gesamten flächenbezogenen Masse der mindestens zwei benachbarten Lagen (1) des Papiertuchs, die zusammen den Grenzflächenbereich (6) definieren, liegt.

2. Mehrlagiges Papiertuchprodukt nach Anspruch 1,
**dadurch gekennzeichnet, dass**
die flächenbezogene Masse der Schicht (7) in der Größenordnung von 0,5 % bis 10 % der gesamten flächenbezogenen Masse der zwei benachbarten Lagen (1) des Papiertuchs, die zusammen den Grenzflächenbereich (6) definieren, liegt.

3. Mehrlagiges Papiertuchprodukt nach Anspruch 1 oder 2, wobei die Schicht (7), die superabsorbierende faserartige Teilchen (8) umfasst, mit einer flächenbezogenen Masse von 0,2 bis 5,0 g/m², vorzugsweise mit einer flächenbezogenen Masse von 0,5 bis 2,0 g/m² auf den Grenzflächenbereich (6) aufgebracht wird.

4. Mehrlagiges Papiertuchprodukt nach einem der vorstehenden Ansprüche, wobei die flächenbezogene Masse der Schicht (7), die superabsorbierende faserartige Teilchen (8) umfasst, in der Größenordnung von 1 % bis 3 % der gesamten flächenbezogenen Masse der zwei benachbarten Lagen (1) des Papiertuchs, die zusammen den Grenzflächenbereich (6) definieren, liegt.

5. Mehrlagiges Papiertuchprodukt nach einem der vorstehenden Ansprüche, wobei die Faserlänge der superabsorbierenden faserartigen Teilchen (8) im Bereich von 3 bis 30 mm, vorzugsweise von 4 bis 10 mm liegt.

6. Mehrlagiges Papiertuchprodukt nach einem der vorstehenden Ansprüche, der Faserdurchmesser der superabsorbierenden faserartigen Teilchen (8) im Bereich von 5 bis 50 µm, vorzugsweise von 20 bis 30 µm liegt.

7. Mehrlagiges Papiertuchprodukt nach einem der vorstehenden Ansprüche, wobei die Faserdichte der superabsorbierenden faserartigen Teilchen (8) im Bereich von 1,0 bis 2,0 g/cm³, vorzugsweise von 1,3 bis 1,5 g/cm³ liegt.

8. Mehrlagiges Papiertuchprodukt nach einem der vorstehenden Ansprüche, das mindestens zwei Lagen (1) geprägter Papiertuchbahnen (2) umfasst, wobei die superabsorbierenden faserartigen Teilchen (8) mindestens teilweise in der Schicht (7) fixiert sind, indem sie in Kammern innerhalb der Grenzfläche (6), die durch die Prägung gebildet wurden, eingeschlossen sind.

9. Mehrlagiges Papiertuchprodukt nach einem der vorstehenden Ansprüche, wobei die superabsorbierenden faserartigen Teilchen (8) durch eine Klebstoffbeschichtung, die für die Verbindung der zwei Lagen (1) von Papiertuch (2) sorgt, fixiert sind.

10. Mehrlagiges Papiertuch nach einem der vorstehenden Ansprüche, wobei die superabsorbierenden faserartigen Teilchen (8) durch eine Klebstoffbeschichtung, die auf mindestens eine der Lagen (1) des Papiertuchs (2) gesprüht wird, fixiert sind.

11. Mehrlagiges Papiertuchprodukt nach einem der vorstehenden Ansprüche, wobei die superabsorbierenden faserartigen Teilchen (8) durch Klebstofffilamente fixiert sind, die ein Netzwerk mit den superabsorbierenden faserartigen Teilchen auf mindestens einer der Lagen von Papiertuchbahnen bilden.

12. Mehrlagiges Papiertuchprodukt nach Anspruch 1, **dadurch gekennzeichnet, dass** die Schicht (7) ferner cellulosische Papierfasern umfasst und eine einzelne Schicht bildet, in der die superabsorbierenden faserartigen Teilchen zusammen mit den cellulosischen Papierfasern in die Schicht (7) eingebettet sind.

13. Mehrlagiges Papiertuchprodukt nach einem der vorstehenden Ansprüche, wobei die flächenbezogene Masse der Schicht (7), die superabsorbierende faserartige Teilchen (8) umfasst, in der Größenordnung von 10 % bis 35 % der gesamten flächenbezogenen Masse der zwei benachbarten Lagen (1) des Papiertuchs, die zusammen den Grenzflächenbereich (6) definieren, liegt.

14. Mehrlagiges Papiertuchprodukt nach einem der vorstehenden Ansprüche, **dadurch gekennzeichnet, dass** die flächenbezogene Masse der Schicht (7) zwischen 3 und 25 g/m² liegt.

## Revendications

1. Produit de papier mousseline multi-plis comprenant
- au moins deux plis (1) de papier mousseline (2) consolidés l'un à l'autre couche par couche, et
- une couche (7) comprenant des particules de type fibre super absorbantes (8) dans au moins une région d'interface (6) entre deux plis adjacents (2) dudit papier mousseline (2), dans laquelle la masse surfacique de ladite couche (7) est de l'ordre de 0,5 % à 50 % du poids de base total desdits au moins deux plis adjacents (1) dudit papier mousseline définissant conjointement la région d'interface (6).

2. Produit de papier mousseline multi-plis selon la revendication 1
**caractérisé en ce que**
ladite masse surfacique de ladite couche (7) est de l'ordre de 0,5 % à 10 % de la masse surfacique globale desdits deux plis adjacents (1) dudit papier mousseline définissant conjointement la région d'interface (6).

3. Produit de papier mousseline multi-plis selon la revendication 1 ou 2, dans lequel ladite couche (7) comprenant des particules de type fibre super absorbantes (8) est appliquée avec une masse surfacique de 0,2 à 5,0 g/m², de préférence avec une masse surfacique de 0,5 à 2,0 g/m² à la région d'interface (6).

4. Produit de papier mousseline multi-plis selon l'une quelconque des revendications précédentes, dans lequel la masse surfacique de ladite couche (7) comprenant des particules de type fibre super absorbantes (8) est de l'ordre de 1 % à 3 % de la masse surfacique globale desdits deux plis adjacents (1) dudit papier mousseline définissant la région d'interface (6).

5. Produit de papier mousseline multi-plis selon l'une quelconque des revendications précédentes, dans lequel la longueur de fibres desdites particules de type fibre super absorbantes (8) est comprise entre 3 et 30 mm, de préférence entre 4 et 10 mm.

6. Produit de papier mousseline multi-plis selon l'une quelconque des revendications précédentes, dans lequel le diamètre des fibres desdites particules de type fibre super absorbantes (8) est compris entre 5 et 50 µm, de préférence entre 20 et 30 µm.

7. Produit de papier mousseline multi-plis selon l'une quelconque des revendications précédentes, dans lequel la masse volumique des fibres desdites particules de type fibre super absorbantes (8) est comprise entre 1,0 et 2,0 g/cm³, de préférence entre 1,3 et 1,5 g/cm³.

8. Produit de papier mousseline multi-plis selon l'une quelconque des revendications précédentes, comprenant au moins deux plis (1) de nappes en papier mousseline gaufré (2), dans lequel les particules de type fibre super absorbantes (8) sont au moins partiellement fixées dans ladite couche (7) en étant piégées dans des compartiments au sein de ladite interface (6) formée par ledit gaufrage.

9. Produit de papier mousseline multi-plis selon l'une quelconque des revendications précédentes, dans lequel les particules de type fibre super absorbantes (8) sont fixées par un enrobage de colle fournissant l'interconnexion des deux plis (1) de papier mousseline (2).

10. Serviette de papier mousseline multi-plis selon l'une quelconque des revendications précédentes, dans laquelle les particules de type fibre super absorbantes (8) sont fixées par un enrobage de colle vaporisé sur au moins un desdits plis (1) du papier mousseline (2).

11. Produit de papier mousseline multi-plis selon l'une quelconque des revendications précédentes, dans lequel les particules de type fibre super absorbantes (8) sont fixées par des filaments de colle, formant un réseau avec les particules de type fibre super absorbantes sur au moins un desdits plis de nappe en papier mousseline.

12. Produit de papier mousseline multi-plis selon la revendication 1, **caractérisé en ce que** ladite couche (7) comprend en outre des fibres de papier cellulosique et forme une couche individuelle dans laquelle lesdites particules de type fibre super absorbantes sont scellées dans ladite couche (7) conjointement avec lesdites fibres de papier cellulosique.

13. Produit de papier mousseline multi-plis selon l'une quelconque des revendications précédentes, dans lequel la masse surfacique de ladite couche (7) comprenant des particules de type fibre super absorbantes (8) est de l'ordre de 10 % à 35 % de la masse surfacique globale desdits deux plis adjacents (1) dudit papier mousseline définissant la région d'interface (6).

14. Produit de papier mousseline multi-plis selon l'une quelconque des revendications précédentes, **caractérisé en ce que** la masse surfacique de ladite couche (7) est comprise entre 3 et 25 g/m².
